# EUROPEAN PATENT APPLICATION

(11) **EP 2 251 949 A2**
(43) Date of publication of application: **17.11.2010**
(21) Application number: 10159777.1
(22) Date of filing: 13.04.2010
(51) Int. Cl.: H02G 3/12, A47B 21/00

(54) **Turnable desk box**

(30) Priority: 20.04.2009 SE 0950258
(71) Applicant: Schneider Electric Industries SAS, 92500 Rueil-Malmaison (FR)
(72) Inventor: Eriksson, Staffan, 611 56, NYKÖPING (SE)
(74) Representative: Karlsson, Leif Karl Gunnar

(57) **Abstract**

Desk box (10) comprising fastening members (28) to fix the desk box (10) in a table top (12), an essentially rectangular abutment frame (15) arranged to abut against the table top (12) as well as a lid (13) placed over an opening formed by the abutment frame (15) in the desk box (10), which desk box (10) further comprises a first end wall (21) connected to a first short side (211) of the abutment frame (15) and a second end wall (22) connected to a second short side (222) of the abutment frame (15), a holder (25) being mounted between said end walls (21, 22) and that the holder (25) is arranged to carry at least one first electric insert (261) to which external electric equipment is connectable, wherein the holder (25) is formed with first mounting members (45a) in which the first electric insert (261) is detachably mounted, the holder (25) being tumabiy mounted to the end walls (21, 22) for rotation around a turning spindle (33) between a connection position, in which the holder (25) is essentially parallelly orientated to the abutment frame (15) in order to facilitate connection of plugs to said insert (261), and an operating position, in which the holder (25) is turned by an angle in the interval of 30°-60°, preferably 45°, in relation to the abutment frame (15) so that also the first electric insert (261) obtains the same angle in relation to the abutment frame (15) and thereby the table top (12) in order to form an increased space (43) in the desk box for the receipt of said plugs when the lid (13) is closed.

## Description

### Technical Field

The present invention relates to the area of desk boxes recessed in table tops for electric, tele- and data socket connections.

### Background of the Invention

In public environments, there is a need of temporary connecting products such as, e.g., vacuum cleaners, computers, conference equipment and telephones. This may, e.g., be carried out by mounting a desk box in an existing table top and connecting the electric products to this desk box.

The patent specification JP 8008005 discloses a desk box that is formed with a holder provided with an abutment frame, which holder is mounted recessed in a table top. In the holder, an electric insert is mounted that is provided with two switch-in connections. This desk box is further provided with two hinged doors that are opened and closed against each other so that they form a transverse slit across the box. When one plug is connected to this box, at least one of the doors has to be open, and when two plugs are connected, both doors have to be open.

When a plug is connected to such a desk box, accordingly at least one door will always be open, which means that the plug is sticking up above the table surface and may thereby be subjected to knocks and impacts that may give rise to loose connection and spark formation. In addition, the plug becomes immediately exposed to liquids that by accident may be spilled on the table.

### The Object of the Invention

The present invention aims at providing a desk box for electric, tele- and data socket connections that is user-friendly, reasonably liquid-proof as well as plane and concealed from the upperside of a table surface also during use.

A further object of the invention is to provide a space in the box in order to, at least partly, receive electric cables that are connected to the desk box.

A further object of the invention is that the desk box should be able to assume a connection position for improved accessibility when plugs are connected as well as an operating position in order to conceal the plugs when they are connected.

In addition, an object of the invention is to enable a desk box that further provides the possibility of connection of electric wires from below.

### Summary of the Invention

By the present invention such as the same is defined in the independent claim, the above-mentioned object is met. Suitable embodiments of the invention are defined in the dependent claims.

The invention concerns a desk box comprising fastening members to fix the desk box in a table top. It also comprises an essentially rectangular abutment frame that is arranged to abut against the table top as well as a lid placed over an opening formed by the abutment frame in the desk box. When the lid is dosed, the desk box obtains an essentially plane geometry also when electric cables are connected. The desk box further comprises a first end wall connected to a first short side of the abutment frame and a second end wall connected to a second short side of the abutment frame, a holder being mounted in said end walls. In this connection, the holder is arranged to carry at least one first electric insert to which external electric equipment is connectable by said cables. The holder is formed with first mounting members in which the first electric insert is detachably mounted, the holder being turnably mounted to the end walls for rotation around a turning spindle between a connection position, in which the holder is essentially parallel orientated in relation to the abutment frame in order to facilitate connection of plugs to said insert, and an operating position, in which the holder is turned by an angle in the interval of 30°-60°, preferably 45°, in relation to the abutment frame so that also the first electric insert obtains the same angle in relation to the abutment frame and thereby the table top. This angled position of the holder and the electric inserts means that an increased space is created inside the desk box in order to receive the plugs and to encase cable connections also when the lid is closed.

In further embodiments of the invention, the holder is provided with second mounting members that are counter-directed to said first mounting members so that at least one second electric insert also can be detachably mounted in the holder for the connection of external electric equipment from the opposite side of the holder. By virtue of said second mounting members, a double-sided mounting of the electric inserts is obtained so that consumers also can be connected from the underside of the table.

In further embodiments of the invention, the holder is formed as a section provided with longitudinal grooves and in which the electric inserts can be continuously variably mounted along the section. By forming the holder as a section having longitudinal grooves, a plurality of electric inserts of different widths can be mounted at optional locations along the section. Also cover lids can be mounted at locations where no insert is mounted in order to obtain a protection against cables penetrating into the section.

In further embodiments of the invention, the lid is provided with a compliant means that connects to the long side of the abutment frame. The compliant means allows cables to be connected to the desk box in spite of the door being dosed, thereby preventing dust and objects from coming down into the box.

In further embodiments of the invention, the underside of the lid is connected to a hinge mechanism that is mounted to the long side of the abutment frame so that said mechanism is concealed when the lid is closed. The hinge mechanism is preferably of the type where a push at the front edge of the lid opens a closed lid and where the lid is closed by pressing the lid downward into closed position in which it stops. The concealed mechanism means that the desk box is essentially plane on a level with the table surface both without and with cables connected.

In further embodiments of the invention, the compliant means is provided with an edge bulge adapted to a groove in the lid in order to thereby be mountable on the lid by the edge bulge being inserted into the groove. That the mounting of the means is carried out in this way implies that the means can be easily replaced, e.g., if the connection thereof to the abutment frame has been deformed or if the present means is to be replaced by another type of means.

In further embodiments of the invention, said compliant means is formed either as an elastic edge or as a brush-shaped edge in order for the lid, as far as possible, to connect to the abutment frame when electric wires run out from the desk box. An elastic edge results in a good dust protection with closed door, while a brush-shaped edge results in a plane surface of the box at connected cables. Accordingly, the edge of the lid can be adapted to a specific use of the box.

In further embodiments of the invention, said holder is formed to carry a plurality of electric inserts, cover means or spacer means. By a "long" holder in a "long" desk box, many electric inserts can be mounted and used simultaneously, which in certain cases is desirable. Voltage feed may be used together with broadband, telephones and conference equipment in one and the same desk box, which implies a wide field of application.

In further embodiments of the invention, the movable holder is provided with at least one springing fastening means that is arranged to co-operate with a lock means placed in the stationary part of the desk box. This means that the springing fastening means can snap-in into the lock means and fix the holder in the connection position in order to facilitate a connection of plugs to the inserts by the holder being locked parallel to the table top. In this position, the access of the electric inserts is the very best and they are in addition almost on a level with the table top, the connection of the plugs being very simple.

In further embodiments of the invention, the springing fastening means is formed as a tongue projecting from a holder end wall. The formation as a tongue means that the fastening means does not need to be manufactured separately but can be punched out together with the holder end wall.

In further embodiments of the invention, the lock means is formed as a punched lug placed in the end wall of the desk box so that the free end of the lug is directed toward the inside of the lid when the lid is closed. With this design, also the lock means can be manufactured at the same time as the end wall. In addition, a natural and close contact between the lock means and the fastening means is provided.

In further embodiments of the invention, the fastening means is provided with a gripping part in order to allow the fastening means to be actuatable to spring in the longitudinal direction of the holder as well as to be able to constitute a handle for the turning of the holder between the operating position thereof and the connection position thereof. The gripping part means a further improvement of the manual manoeuvrability of the holder upon locking, unlocking as well as angulation.

In further embodiments of the invention, the angular turning of the holder from the connection position is limited against a stop face placed adjacent to the hinge mechanism. The stop face represents a natural stop for the angular motion and may, e.g., be integrated directly in the hinge mechanism or the holder thereof. By the angular motion being limited, also the manoeuvring by means of the gripping part is facilitated.

Accordingly, the invention concerns a desk box comprising at least one electric insert, but often a plurality, to which electric products can be connected from both the front side and the back side of the insert. The insert is placed in a connection cavity in the desk box and can be angled between a connection position and an operating position so that an increased space for plugs is formed at the upperside of the inserts when the inserts are turned from the connection position into the operating position in order to allow a lid to be closable when electric consumers are connected to the inserts. Fastening members are arranged to fit the desk box in a table top.

### Brief Description of the Drawings

The invention will now be described in more detail by means of embodiment examples, reference being made to the accompanying drawings, wherein
- Figure 1: shows a desk box according to the present invention mounted retracted in a table top,
- Figure 2: shows a perspective view from above of the desk box according to the invention in a connection position.
- Figure 3: shows a side view of the desk box according to Figure 2,
- Figure 4: shows a section view through the desk box according to Figure 2,
- Figure 5: shows a perspective view from above of the desk box according to the invention in an operating position,
- Figure 6: shows a side view of the desk box according to Figure 5,
- Figure 7: shows a section view through the desk box according to Figure 5,
- Figure 8: shows a perspective view from above of the desk box according to the invention in an operating position when the lid is closed.

### Description of the Invention

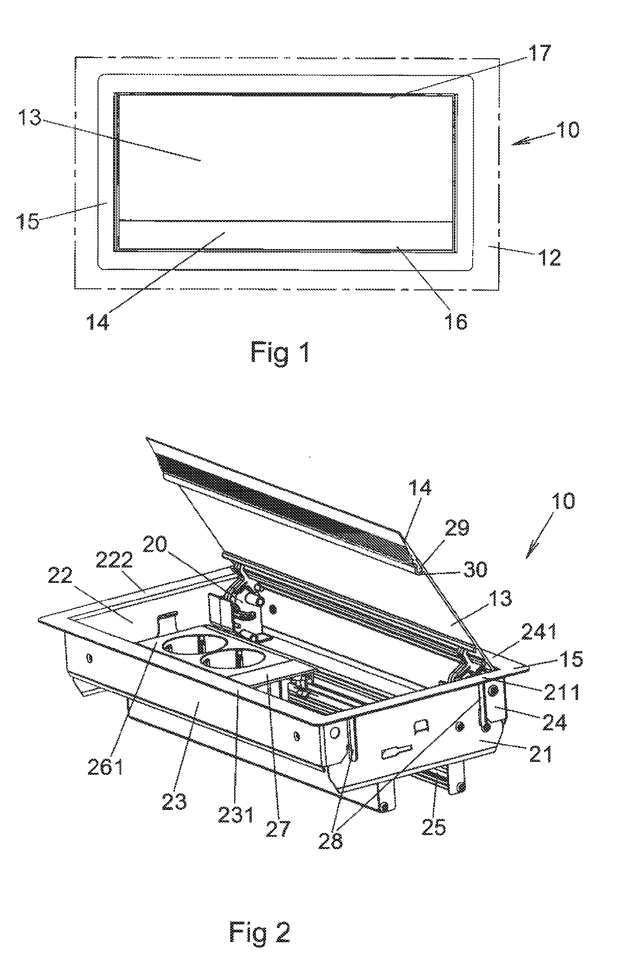

Figure 1 shows a desk box 10 that is embeddedly mounted in a table top 12. The desk box is covered by a lid 13 that is provided with a compliant means 14 that connects to a rectangular abutment frame 15, which abuts flatly against the table top. The compliant means 14 may be manufactured from a soft polymer or be of natural rubber and be formed tapering toward the abutment edge 16 thereof. The lid is further raiseable by it being provided with a hinge mechanism at the opposite edge 17 of the abutment edge 16. As is seen in the figure, the abutment frame, and thereby the desk box, is formed with opposite long sides and opposite short sides orientated perpendicular to each other. When the lid is lowered, the desk box obtains a plane position almost on a level with the surface of the table top, which gives the table a clean and tidy look at the same time as papers, books, etc., even can be placed on top of the desk box.
Figure 2 shows the desk box 10 according to the invention with the lid 13 raised, the hinge mechanism 20 being shown that consists of two parts placed internally at each side of the abutment frame 15. The desk box comprises a first end wall 21 connected to a first short side 211 of the abutment frame and a second end wall 22 connected to a second short side 222 of the abutment frame. The end walls 21, 22 are connected with a first supporting edge 23 along a first long side 231 of the abutment frame and with a second supporting edge 24 along a second long side 241 of the abutment frame. Between the two end walls 21, 22, a holder 25 is fixedly mounted, which holder is arranged to carry one or more electric inserts 261. The figure shows an electric insert in the form of a double earthed voltage socket 261. Also data sockets in different forms can be mounted in the holder. In addition, it is shown that the holder furthermore, beside the electric insert, carries a cover means 27 in order to conceal the inside of the holder when only a few inserts are mounted. The cover means may also be a spacer means 27 to provide a defined distance between adjacent inserts. The desk box is further provided with suspension members 28 that are for attachment of a basket, not shown, that can hang under the desk box to take care of so-called cable slack. The suspension members constitute a bent end part of the supporting edges 23, 24. The figure also shows the compliant means 14, which is provided with an edge bulge 29 inserted into a groove 30 in the lid 13.

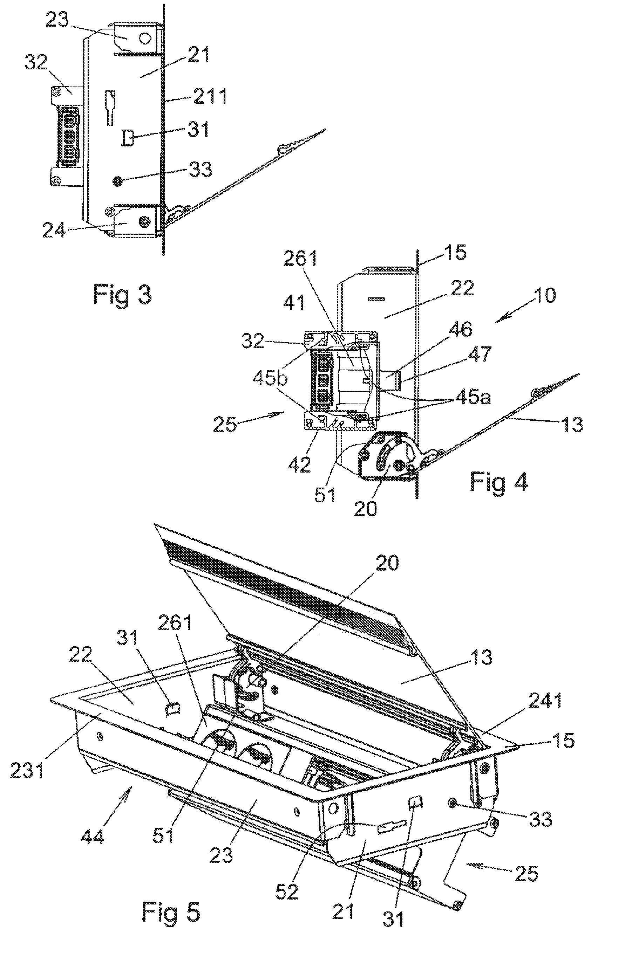

Figure 3 shows the desk box from the side with the first end wall 21 connected to the first short side 211 of the abutment frame. Furthermore, the first supporting edge 23 and the second supporting edge 24 are shown. The first end wall 21 is provided with a lock means 31 formed as a lug that is punched out inward the desk box and has a free end directed upward toward the inside of the lid when the lid is closed. In each end, the holder is mounted to a holder end wall 32, the holder together with the holder end wall 32 being turnably mounted to the end walls 21 of the box around a turning spindle 33.
Figure 4 shows a perpendicular section through the desk box 10 with the holder 25 including the mounting sections 41, 42 thereof mounted in the two end walls, the second end wall 22 of which is visible in the section. As is seen in the figure, the double earthed voltage socket 261 is mounted in the holder 25. Also additional electric inserts with access from the two sides of the holder can be mounted in the holder 25. The holder 25 is formed as an aluminium section in two pieces that is provided with longitudinal grooves placed at the front side of the section in the form of first mounting members 45a as well as at the back side of the section in the form of second mounting members 45b so that the electric inserts can be continuously variably placed optionally along the section. The position of the holder 25 shown in Figures 3 and 4 applies to a connection position in which the upwardly facing insert is parallel to the abutment frame 15 and thereby the lid 13 in the closed position. The mounting sections 41, 42 of the holder, preferably manufactured from aluminium, are united in the two ends thereof by the holder end walls 32, the second one of which is visible in the shown section. This shown holder end wall is provided with a fastening means 46 that is springing in the longitudinal direction of the holder and is in the form of a projecting tongue. The side of the fastening means that faces the end wall 22 is provided with a protuberance that is arranged to, by snap action, co-operate with the punched lug, which projects inward the box, on the lock means of the end wall. The fastening means 46 is further provided with a gripping part 47 in order to facilitate the disengagement of the tongue from the lock means and also contribute to work as a handle upon manoeuvring of the holder 25. The figure also shows the hinge mechanism 20 that is provided with a stop face 51 against which the turning of the holder 25 is limited.

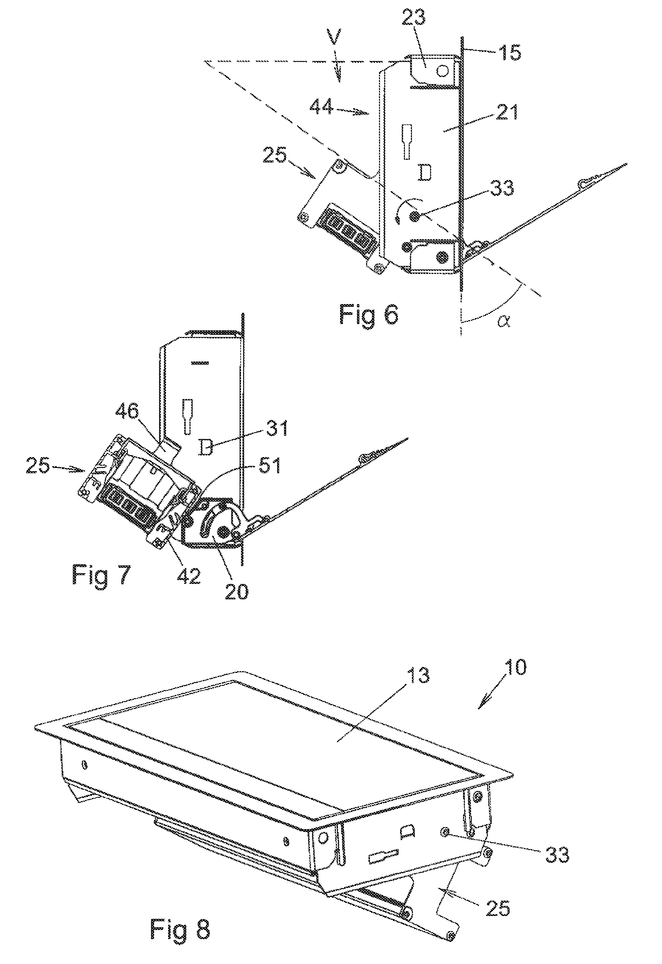

Figure 5 shows the desk box in an operating position, which means that the entire holder 25 including the electric insert 261 thereof has been turned around the turning spindle 33 thereof, which means that the holder has been rotated at an angle α, see Figure 6, in relation to the underside of the abutment frame 15 and thereby to the table top. By the turning spindle 33 being mounted in the end walls 21, 22 nearer the second long side 241 of the abutment frame than the first long side 231 thereof, an essentially wedge-shaped space volume in the desk box is obtained, which space volume is limited by the closed lid 13, the end walls 21, 22, the holder 25 and the first supporting edge 23 of the desk box. In order for, from the connection position shown in Figure 2 to the operating position shown in Figure 5, the two fastening means of the holder end walls have been pushed inward the box, the same having been released from the two lock means 31 so that the holder can be turned into the shown position. The angle that the holder can be turned is preferably approx. 45° but may assume any angle in the interval of 30°-60°. The wedge-shaped space volume means that electric plugs can be connected to the electric inserts in spite of the lid being closed. The space volume together with an opening 44 in the desk box underneath between the holder 25 and the first supporting edge 23 also gives a further possibility of hiding away the cables connected from the upper side. The figure also shows the hinge mechanism 20 that is provided with the stop face 51 placed adjacent to the mechanism, e.g., directly on the same. Furthermore, the figure shows fastening members 52 for the fixing of the desk box in the table top. The fastening members 52 are placed on the end walls 21, 22 and have the shape of a lying bottle. The mounting of an attachment for the fastening member 52 is made by introducing the attachment into the larger part of the opening and then pushing it laterally to the smaller part of the opening. On the attachment, there is a screw mounted and when the same is tightened, it meets the underside of the table top, thereby attaching the desk box.
Figure 6 shows that the holder 25 has been turned in the direction of the arrow around the turning spindle 33 by the angle α so as to form the wedge-shaped space volume V formed between the abutment frame 15, the holder 25, the end walls (the first end wall 21 of which is shown), and the first supporting edge 23. The opening 44 is also indicated in the figure. In the connection position, there may also be an opening between the holder and the supporting edge, but in the operating position, the opening 44 is larger in order to make it possible to hid away electric cables in the desk box.
Figure 7 shows a section through the desk box in the operating position, the holder 25 being turned to the end position thereof so that the mounting section 42 of the holder 25 by the plane outer side thereof abuts against the stop face 51 of the hinge mechanism 20. The figure also shows that the fastening means 46 has been loosened from the lock means 31 so that the turning of the holder 25 could be carried out.
Figure 8 shows the desk box 10 with the lid 13 thereof closed in the operating position, the holder 25 having been turned to the end position thereof around the turning spindle 33. The figure shows that the desk box assumes a flat upper surface in the operating position, which surface generally is lying in the same plane as the table surface in which the box is recessed, which means that cabling and plugs connected to the electric inserts are protected and concealed in order not to be damaged from work on the table. In addition, said work is made easier since plugs and cables are not in the way.

## Claims

1. Desk box (10) comprising fastening members (28) to fix the desk box (10) in a table top (12), an essentially rectangular abutment frame (15) arranged to abut against the table top (12) as well as a lid (13) placed over an opening formed by the abutment frame (15) in the desk box (10), which desk box (10) further comprises a first end wall (21) connected to a first short side (211) of the abutment frame (15) and a second end wall (22) connected to a second short side (222) of the abutment frame (15), a holder (25) being mounted between said end walls (21, 22) and that the holder (25) is arranged to carry at least one first electric insert (261) to which external electric equipment is connectable, **characterized in that** the holder (25) is formed with first mounting members (45a) in which the first electric insert (261) is detachably mounted, the holder (25) being turnably mounted to the end walls (21, 22) for rotation around a turning spindle (33) between a connection position, in which the holder (25) is essentially parallel orientated to the abutment frame (15) in order to facilitate connection of plugs to said insert (261), and an operating position, in which the holder (25) is turned by an angle in the interval of 30°-60°, preferably 45°, in relation to the abutment frame (15) so that also the first electric insert (261) obtains the same angle in relation to the abutment frame (15) and thereby the table top (12) in order to form an increased space (43) in the desk box for the receipt of said plugs when the lid (13) is closed.

2. Desk box according to claim 1, **characterized in that** the holder (25) is provided with second mounting members (45b) that are counter-directed to said first mounting members (45a) so that at least one second electric insert (42) also can be detachably mounted in the holder (25) for the connection of external electric equipment from the opposite side of the holder (25).

3. Desk box according to any one of claims 1-2, **characterized in that** the holder (25) is formed as a section provided with longitudinal grooves and in which the electric inserts (261) can be continuously variably mounted along the section.

4. Desk box according to any one of claims 1-3, **characterized in that** the lid (13) is provided with a compliant means (14) that connects to the first long side (231) of the abutment frame (15).

5. Desk box according to claim 4, **characterized in that** the underside of the lid (13) is connected to a hinge mechanism (20) that is mounted to the second long side (241) of the abutment frame (15) so that said mechanism (20) is concealed when the lid (13) is closed.

6. Desk box according to any one of claims 4-5, **characterized in that** the compliant means (16) is provided with an edge bulge (29) adapted to a groove (30) in the lid in order to thereby be mountable on the lid by the edge bulge (29) being inserted into the groove (30).

7. Desk box according to any one of claims 4-6, **characterized in that** said compliant means (16) is formed either as an elastic edge or as a brush-shaped edge in order for the lid (13), as far as possible, to connect to the abutment frame (15) when electric wires run out from the desk box (10).

8. Desk box according to any one of claims 1-7, **characterized in that** said holder (25) is formed to carry a plurality of electric inserts (261), cover means (27a) or spacer means (27b).

9. Desk box according to any one of claims 1-8, **characterized in that** the movable holder (25) is provided with at least one springing fastening means (46) that is arranged to co-operate with a lock means (31) placed in the stationary part of the desk box.

10. Desk box according to claim 9, **characterized in that** the springing fastening means (46) is formed as a tongue projecting from a holder end wall (32).

11. Desk box according to any one of claims 9-10, **characterized in that** the lock means (31) is formed as a punched lug placed in the end wall (21, 22) of the desk box so that the free end of the lug is directed toward the inside of the lid (13) when the lid is closed.

12. Desk box according to any one of claims 9-11, **characterized in that** the fastening means (46) is provided with a gripping part (47) in order to allow the fastening means (46) to be actuatable to spring in the longitudinal direction of the holder (25) as well as to be able to constitute a handle for the turning of the holder (25) between the operating position thereof and the connection position thereof.

13. Desk box according to any one of claims 5-12, **characterized in that** the angular turning of the holder (25) from the connection position is limited against a stop face (51) placed adjacent to the hinge mechanism (20).
